# EUROPEAN PATENT SPECIFICATION

(11) **EP 0 770 513 B1**
(45) Date of publication and mention of the grant of the patent: **12.01.2000**
(21) Application number: 95402225.7
(22) Date of filing: 05.10.1995
(51) Int. Cl.: B60N 2/08

(54) **Infinitely adjustable track locking mechanism**
Unbegrenzt verstellbarer Gleitschienenverriegelungsmechanismus
Dispositif de verrouillage de glissières ajustables infiniment

(43) Date of publication of application: 02.05.1997
(73) Proprietor: BERTRAND FAURE EQUIPEMENTS S.A., 92641 Boulogne Cedex (FR)
(72) Inventor: Premji, Gulam, Missisauga, Ontario LSM 414 (CA)
(74) Representative: Burbaud, Eric

(56) References cited:
- DE-A- 3 420 103
- FR-A- 2 506 692
- GB-A- 2 285 089
- US-A- 5 183 236

## Description

### FIELD OF THE INVENTION

The present invention relates to manually operated mechanisms for selectively locking in infinitely adjustable relation to each other, a stationary element and a movable element co-operatively mounted on the stationary element, and more particularly to manually operated vehicle seat track slides having at least one stationary track member and one movable track member to be selectively locked in infinitely adjustable relation to each other.

### BACKGROUND OF THE INVENTION

Many manually adjustable prior art vehicle seats have incrementally adjustable vehicle seat track members on which the entire seat assembly slides between a plurality of discrete fore and aft positions, wherein two track members are locked in place with respect to each other by a separate external locking means having teeth that protrude into aligned apertures in one or both of the two track members. There are, however, numerous problems associated with incrementally adjustable vehicle seat tracks and the locking mechanisms therefor, not the least of which is partial locking. Partial locking occurs when the teeth of the external locking means do not fully engage the apertures in the tracks on one or both of the inboard and outboard seat tracks. This problem is particularly acute in modern vehicle seating installations which utilize an integrated restraint system , where at least one anchor point for the passenger seat belts is attached to the seat assembly for adjustably sliding movement with the vehicle seat. These arrangements typically require that both of the inboard and outboard seat tracks be simultaneously fully locked under crash-like conditions, so as to safely handle the increased loading applied to the seat tracks by the seat belt attachments.

To ensure such simultaneous full locking, manually actuated, infinitely adjustable seat track locking mechanisms have recently found favour. These devices have no discrete teeth or detent members which engage slots in the seat track slides etc. Rather, infinitely adjustable seat track locking mechanisms typically use spring clutches or other devices to lock at any position upon release of the actuation mechanism by the user. Infinitely adjustable seat track locking mechanisms have found such favour despite their increased cost and complexity because they substantially solve the problem of partial locking discussed above, and offer more adjustment possibilities to the seat track designer, and ultimately the seat occupant. Also, generally speaking, infinitely adjustable seat track locking mechanisms are capable of providing for higher loading before failure under crash-like deceleration conditions, and substantially free up the interior space of the vehicle seat track slide to allow use of this space for other purposes (such as rollers or anti-rattle mechanisms).

One example of a recent infinitely adjustable locking mechanism is disclosed in U.S. Patent US-A-5,183,236 (Droulon), which discloses the preamble of claim 1 and which patent is related to a locking mechanism for rectilinear or circular displacement mechanical jacks. A mechanical jack is a broad term used in the Droulon patent to refer to a type of mechanism that has two co-operating members that are movable one with respect to the other, and that permits selective locking of the two members in chosen displacement one to the other.

In one embodiment of the Droulon patent, a casing is slidably mounted on a jack rod, which jack rod is part of the vehicle seat, for relative sliding movement of the casing along the jack rod. The casing is also operatively mounted in secure relation to the vehicle. A "V"-shaped pawl block is retained within the casing for movement between a locking position and an unlocking position, as will be described subsequently. The pawl block has a pair of inclined ramp surfaces that define a "V"-shaped cavity, which "V"-shaped cavity, together with an engagement surface on the rod, define a substantially triangular recess. A striated roller member is rotatedly mounted within the triangular recess for rolling contact with the engagement surface on the rod.

The Droulon pawl block has first and second sloped side surfaces that converge and join at a flat end surface. The first sloped side surface abuts against a co-operating corresponding sloped abutment surface on the casing. The second sloped side surface is in intimate supported contact with a rotatable generally round cam member, which rotatable cam member is also retained within the casing for movement between a blocking position and releasing position. In the blocking position, the cam member retains the pawl block in its locking position, and in the releasing position, the cam member retains the pawl block in its unlocking position. In either the locking or unlocking position of the pawl block, the pawl block is angularly pinched in unstable rockable relation between the generally round cam member and the sloped abutment surface of the casing.

The Droulon infinitely adjustable locking mechanism works in the following manner. In its locking position, the pawl block is wedged between the cam member and the sloped abutment surface of the casing, and is forced into its locking position whereat the striated roller is forced into intimate engagement with the engagement surface on the rod. The striated roller is trapped in centred relation within the triangular recessed defined by the engagement surface and the pawl block. When an accelerative or decelerative force is applied to the vehicle seat, the striated roller attempts to roll along the engagement surface of the rod; however, the striated roller becomes pinched between the rod and the respective inclined ramp surface of the pawl block. Accordingly, the striated roller cannot move along the rod, and thus the casing and the rod are locked with respect to each other.

In its unlocking position, the Droulon cam member is rotated so that the pawl block is not pushed into its locked position. A spring member biases the pawl block to its unlocking position, whereat the striated roller does not contact, or at least loosely contacts, the engagement surface on the rod. The casing and the rod may then be moved relative to one another. Once in a desired position, the cam member is returned to its blocking position at the pawl block is forced to its locking position, whereat the striated roller is again brought into locking engagement with the engagement surface of the rod, thus locking the casing and the rod with respect to each other.

While the Droulon device makes a definite improvement in the art, it has been found that the generally round cam member tends to act as a pivot point for the pawl block. Accordingly, there tends to be relative movement, and therefore looseness, between the pawl block and the sloped side surface, and also between the pawl block and the striated roller. This looseness between adjacent parts is known in the art as "chuck". The problem of chuck arises inherently in any mechanical vehicle seat locking device, and is the result of the clearances that are necessarily a part of any device containing mass-produced parts adapted to undergo relative movement. Chuck is a highly undesirable characteristic in automobile seat back hinges, for both safety and aesthetic reasons.

The Droulon mechanism exhibits a higher degree of chuck than is ideally desirable because a generally round cam member is used to control the positioning of the pawl block, which cam acts as a pivot point for the pawl block. This imparts a first source of chuck into the Droulon device. It can be seen that there is a second source of chuck imparted to the Droulon device on account of the clearances between the first sloped side surface of the pawl block and the co-operating, correspondingly sloped, abutment surface of the casing. There is a third source of chuck in relation to lost motion between the striated roller and the remaining components of the device. These three sources of chuck are highly undesirable, as they stack together to cause an overall looseness in the operation of the locking mechanism.

Another factor that affects the proper operation of the Droulon prior art locking mechanism is that it requires close manufacturing tolerances of the various parts that make up the locking mechanism. That is, if the parts have been manufactured slightly undersized, the striated roller may not properly engage the engaging surface on the rod, and resultingly, the locking mechanism may not lock the two co-operating elements with respect to each other. Conversely, if the parts have been manufactured slightly oversized, the locking mechanism may jam. The need for close manufacturing tolerances increases the cost and complexity of manufacture.

Another problem associated with the Droulon type of infinitely adjustable locking mechanism is the tendency of the various parts, such as the cam member, to physically wear after a period of time. Such wear causes increased looseness in the mechanism and accordingly, an even greater amount of chuck. In extreme circumstances, a significant amount of wear of the various parts could mean that the striated roller does not properly engage the engaging surface on the rod, thus perhaps precluding the locking mechanism from locking the two co-operating elements with respect to each other.

Another inherent problem with the Droulon mechanism is that it tends to lock better in one direction than in the other opposite direction. This directionality problem is overcome in the several illustrated embodiments by the inclusion of two "V"-shaped pawl blocks, each pawl block retaining a separate striated roller, and each pawl block abutting against opposed sloped sides of the casing. This solution introduces problems of increased degrees of chuck, increased overall size of the locking mechanism, increased complexity of manufacturing, and increased cost.

It is an object of the present invention to provide a mechanism for selectively locking in infinitely adjustable relation to each other, a stationary element and a co-operating movable element, wherein chuck is minimized.

It is on object of the present invention to provide a mechanism for selectively locking an infinitely adjustable relation to each other, a stationary element and a co-operating movable element, wherein relatively large tolerances in the size of the parts of the mechanism are within acceptable safety limits.

It is an object of the present invention to provide a mechanism for selectively locking an infinitely adjustable relation to each other a stationary element and a co-operating movable element, wherein wear of the parts of the mechanism is automatically accommodated.

It is an object of the present invention to provide a mechanism for selectively locking an infinitely adjustable relation to each other a stationary element and a co-operating movable element, which mechanism is relatively simple to manufacture.

It is an object of the present invention to provide a mechanism for selectively locking an infinitely adjustable relation to each other a stationary clement and a co-operating movable element, which mechanism is relatively inexpensive to manufacture.

It is an object of the present invention to provide a mechanism for selectively locking an infinitely adjustable relation to each other a stationary element and a co-operating movable element, which mechanism is relatively small in size.

It is an object of the present invention to provide a mechanism for selectively locking an infinitely adjustable relation to each other a stationary element and a co-operating movable element, wherein the mechanism employs a single roller and locks equally well in opposite linear directions.

### SUMMARY OF THE INVENTION

In accordance with the present invention, a mechanism of the kind in question - i.e. as disclosed in US-A-5,183,236 and as defined in the preamble of claim 1 is essentially
characterized in that the wedge block means is slidably mounted with respect to said casing so as to be movable in opposite third and fourth linear directions along a second axis generally transverse to said first axis,
and in that in the blocking position, the wedge block means is wedgingly engaged between said wedge-contacting surface of the pawl block and said abutment portion of said casing so as to thereby urge said pawl block into said locking configuration, said wedge-contacting surface of the pawl block and said pawl contacting surface of the wedge block means being two mutually parallel planar surfaces which are in flat surface-to surface stable contact.

Further developments in line with the invention are referred to in the dependent claims.

Other advantages, features and characteristics of the present invention, as well as methods of operation and functions of the related elements of the structure, and the combination of parts and economies of manufacture, will become more apparent upon consideration of the following detailed description and the appended claims, with reference to the accompanying drawings, the latter of which is briefly described hereinbelow.

### BRIEF DESCRIPTION OF THE DRAWINGS

**Figure 1** is a side elevational view of a vehicle seat assembly mounted on the floor of a vehicle, with the vehicle seat assembly having a locking mechanism according to the present invention installed thereon, with the vehicle seat assembly being positioned in a generally central fore-aft position relative to the vehicle floor;
**Figure 2** is a side elevational view of the vehicle seat or **Figure 1**, with the vehicle seat assembly being positioned in a generally forward fore-aft position relative to the vehicle floor;
**Figure 3** is a perspective view of the vehicle seat track slides upon which the vehicle seat assembly of **Figures 1 and 2** is mounted, with the locking mechanism of the present invention operatively installed on each of the inboard and outboard track slides;
**Figure 4** is a substantially enlarged perspective view of one of the locking mechanisms of **Figure 3**, installed on the inboard track slide;
**Figure 5** is a top plan view of the inboard track slide and the locking mechanism of **Figure 4**;
**Figure 6** is a substantially enlarged perspective view similar to **Figure 4**, with the casing of the locking mechanism shown partially exploded and cut-away;
**Figure 7** is a cross-sectional end view of the inboard track slide and the locking mechanism, taken along section line 7-7 of **Figure 4**, with the wedge block means in its blocking position and the pawl block in its locking configuration;
**Figure 8** is a sectional end view similar to **Figure 7**, with the wedge block means in its withdrawn position and the pawl block in its unlocked configuration;
**Figure 9** is a reduced top plan view, partially in cross-section, taken along section line 9-9 of **Figure 7**, showing the locking mechanism in its locked configuration; and,
**Figure 10** is a top plan view, partially in cross-section, similar to **Figure 9**, but with the striated roller shown in ghost outline in two positions corresponding to the locking configuration of the locking member, under the influence of significant accelerative and decelerative forces.

### DETAILED DESCRIPTION OF A PREFERRED EMBODIMENT

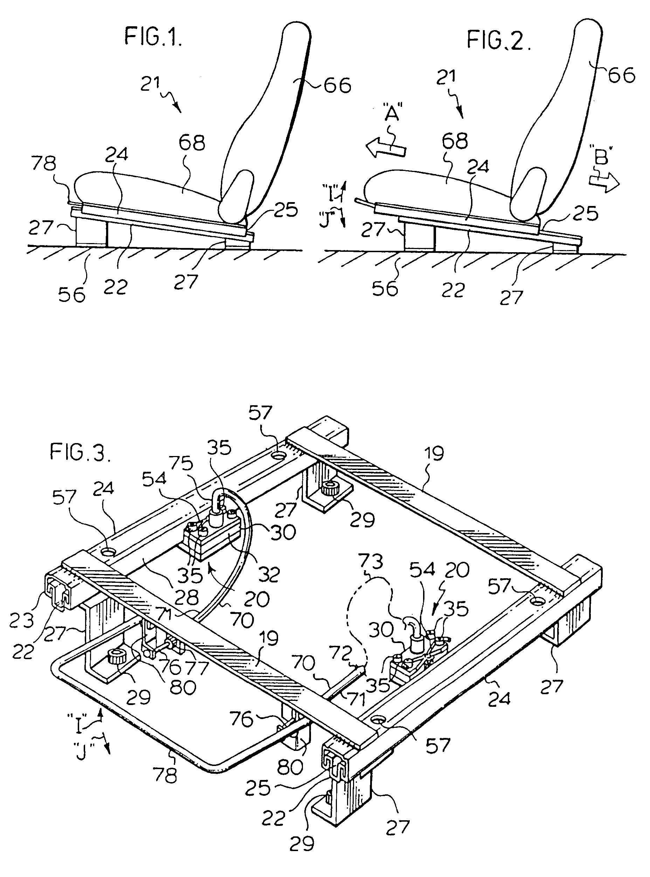

Referring now to Figures 1 and 2 of the drawings, a vehicle seat assembly, as indicated by the general reference numeral 21, is shown mounted on the floor 56 of a vehicle (not shown), with the locking mechanism of the present invention, as indicated by the general reference numeral 20, installed thereon. The vehicle seat assembly 21 shown is one of two front "bucket" type seats of the vehicle, and, for reference purposes herein, will be assumed to be the driver's seat assembly of a typical left-hand drive vehicle.

Figure 1 shows the vehicle seat assembly 21 in a generally central fore-aft position relative to the vehicle floor 56, which position would be a typical in-use position for an average sized passenger (not shown) seated in the vehicle seat assembly 21. Figure 2 shows the vehicle seat assembly 21 after the locking mechanism 20 of the present invention has been unlocked, and the vehicle seat assembly 21 has been moved to a forward fore-aft position relative to the vehicle floor 56, which position would be used for a short legged passenger, or, for example, to facilitate ingress into and egress from, or general access to, the rear seat area of a two door vehicle.

As can best be understood with reference to Figure 3, the vehicle seat assembly 21 is adjustably mounted in the vehicle atop a pair of seat track slides 23,25. The inboard seat track slide is marked in the Figures with reference numeral 23, while the substantially identical outboard seat track slide is marked with reference numeral 25. Both of the inboard 23 and outboard 25 slides comprise a stationary vehicle seat track member 22 and a moveable vehicle seat track member 24, which stationary 22 and moveable 24 vehicle seat track members are co-operatively mounted one to the other in a conventional manner for sliding fore-aft movement of the moveable vehicle seat track member 24 with respect to the stationary vehicle seat track member 22 in opposed first and second directions, as indicated by arrows "A" and "B", respectively. The stationary trick member 22 of each of the inboard 23 and outboard 25 track slides is secured to the vehicle floor 56 by way of front and rear leg members 27 and anchor bolts 29. The moveable track member 24 of each of track slides 23,25 may be connected to each other by way of a pair of bracing members 19, affixed to each of the moveable track members 24 as shown, by spot welding, or any other suitable affixation means.

Each of the movable track members 24 is itself bolted or otherwise rigidly affixed to the vehicle seat assembly 21 by means of bolts 58 extending through apertures 57 positioned adjacent opposite linear ends of the respective movable track members 24. The bolts 58 conventionally engage the frame structure (not shown) of the vehicle seat assembly 21. One locking mechanism 20, as will be subsequently described, is installed on the inboard seat track slide 23 and another substantially identical locking mechanism 20 is similarly installed on the outboard seat track slide 25, so as to each engage a generally planar engagement surface 28 positioned on an exterior surface 26 of the respective one of the moveable track members 24 of each slide 23,25.

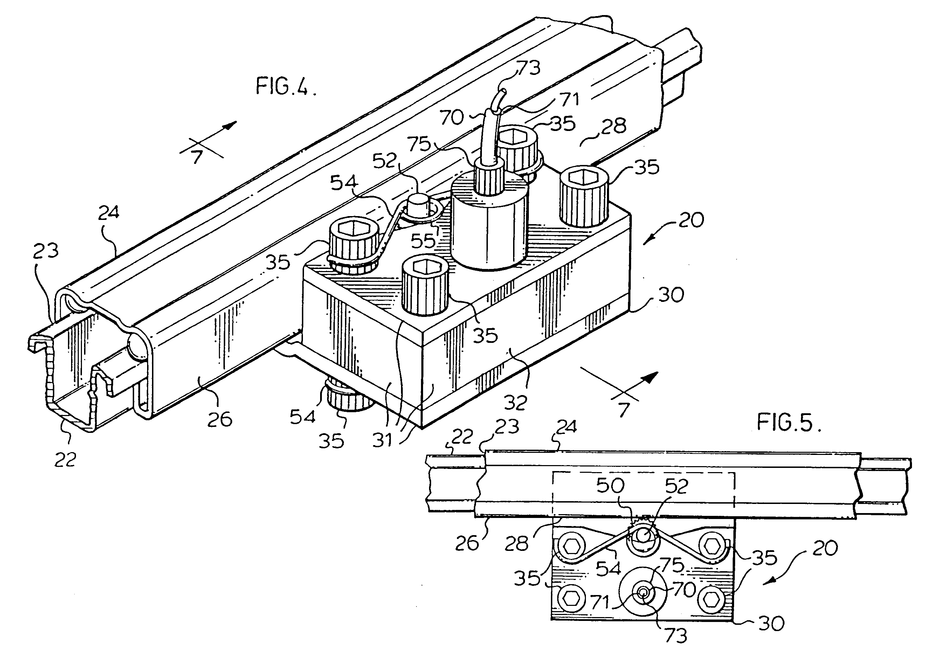

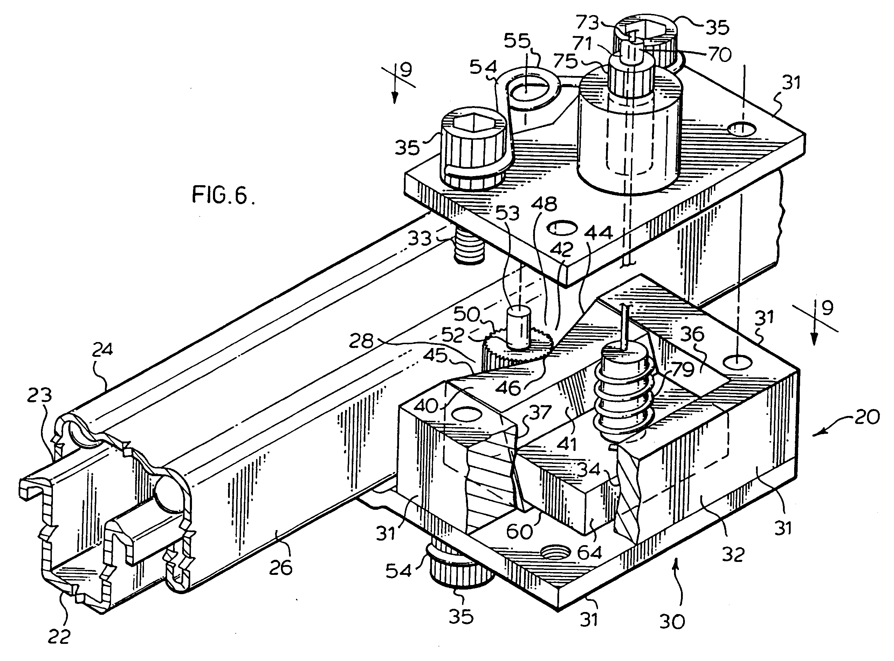

Referring now to Figures 3 through 10 of the drawings, the locking mechanism 20 for selectively locking in infinitely adjustable relation to each other a stationary element, such as the stationary vehicle seat track member 22, and a moveable element, such as the moveable vehicle seat track member 24, is shown.

The operative components of the locking mechanism 20 are enclosed within a casing, generally designated by the reference numeral 30, which casing 30 is rigidly mounted to the stationary vehicle seat track member 22, externally of the stationary vehicle seat track member 22 and the moveable vehicle seat track member 24.

The casing 30 has top 31a and bottom 31b wall members, two opposed side wall members 31c, and an end wall member 31d that acts as a fixed abutment portion 32. In the preferred embodiment shown in the Figures, the side well members 31c and the end wall member 31d are formed as one integral piece, with each of the top 31a and bottom 31d wall members being separate plates. All of these various components of the casing 30 are removably secured together by four bolts 33. The abutment portion 32 is an integral part of the casing 30, and presents, internally of the casing 30, a substantially planar surface 34, as will be discussed subsequently in greater detail.

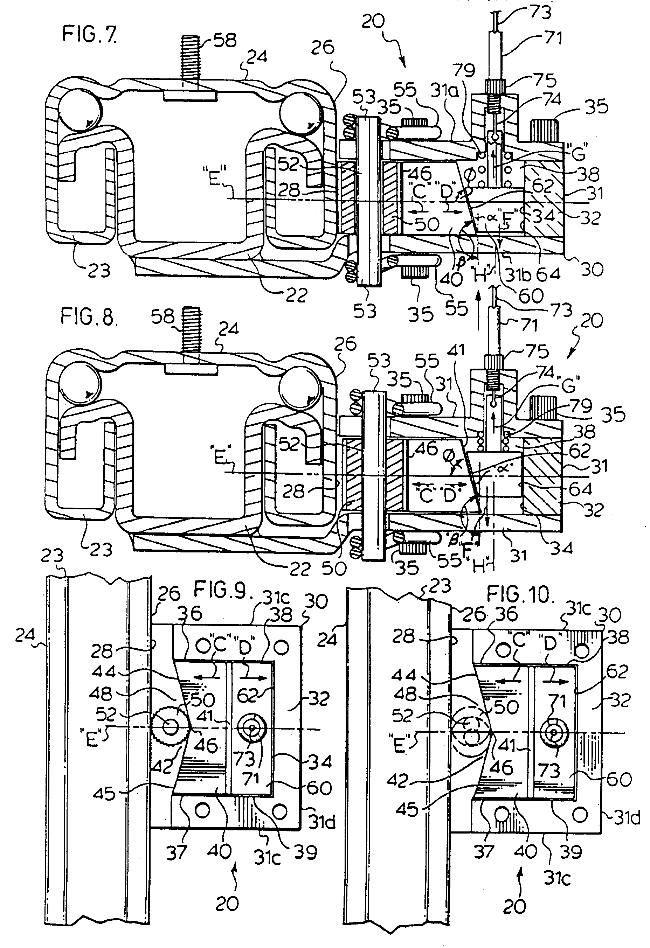

A pawl block 40, preferably constructed using powdered metal casting techniques to achieve close manufacturing tolerances, is slidably mounted within the casing 30 between two parallel inner guide surfaces 36 and 37 of the opposed casing side wall members 31c,31c. The pawl block 40 is slidably movable in opposite first "C" and second "D" linear directions along a first axis "E", which first axis "E" is substantially transverse to the generally planar engagement surface 28, between a locking configuration, as best seen in Figure 7, and an unlocked configuration, as best seen in Figure 8. Preferably, there is just enough clearance between the pawl block 40 and each of the two parallel inner guide surfaces 36 and 37 so that the pawl block 40 slides readily therebetween, but is not loose. Clearances in the order of 0.001" to 0.004" (25,4 to 101,6 µm) are desirably attainable in this regard.

The pawl block 40 has a substantially "V" shaped cavity 42 at one end thereof, and a substantially planar wedge-contacting surface 41 located on the opposite other end thereof. The substantially "V" shaped cavity 42 is defined by two ramp surfaces 44 and 45, which ramp surfaces 44 and 45 are inversely inclined towards an apex of intersection 46. The inclined ramp surfaces 44 and 45, together with the engagement surface 28, define a substantially triangular recess 48. Movement of the pawl block 40 along the first axis "E" in first direction "C" decreases the linear distance between the apex of intersection 46 of the two ramp surfaces 44 and 45 and the generally planar engagement surface 28 of the moveable vehicle seat track member 24, while movement of the pawl block 40 along the first axis "E" in the opposite second direction "D" increases this linear distance.

A striated roller member 50 is rotatably mounted on the casing 30 so as to be positioned within the substantially triangular recess 48, by means of a centrally disposed axle means 52. The axle means 52 is preferably held in centred relation to the apex of intersection 46 by a pair of torsion springs 54. The tree ends 56 of each of the torsion springs 54 engage the casing 30 at the heads 35 of bolts 33. The central body portion 55 of each of the torsion springs 54 engages a respective opposite end 53 of the axle means 52. Thus, the two torsion springs 54 act as a biasing means so as to substantially center the striated roller 50 with respect to the apex of intersection 46 of the two inversely inclined ramp surfaces 44 and 45.

The striated roller 50 is further positioned within the substantially triangular recess 48 for simultaneous circumferential engagement with the generally planar engagement surface 28 of the moveable vehicle scat track member 24 and at least one of the inclined ramp surfaces 44 and 45 when the pawl block 40 is moved in a first linear direction "C" along the first axis "E" to a locking configuration. The striated roller member 50 is further positioned within the substantially triangular recess 48 for removal from aforesaid simultaneous circumferential engagement when the pawl block 40 is moved in a second linear direction "D" along the first axis "E" to an unlocked configuration, as best seen in Figure 8.

A wedge block means 60 is situated between the pawl block 40 and the substantially planar surface 34 of the abutment portion 32. A substantially planar pawl-contacting surface 62 on the wedge block means 60 operatively contacts the substantially planar wedge-contacting surface 41 on the pawl block 40. The wedge block means 60 also has an abutment portion engagement surface 64, located at its opposed other end to the pawl-contacting surface 62, which abutment portion engagement surface 64 is adapted to contact the substantially planar surface 34 of the abutment portion 32 in force transmitting relation, relative to axis "E".

The wedge block means 60 is also preferably constructed using powdered metal casting techniques to achieve close manufacturing tolerances, and is slidably mounted with respect to the casing 30 between two parallel guide surfaces 38 and 39, (which are the innermost surfaces of the opposed side wall members 31c of the casing 30) so as to be movable in opposite third "F" and fourth "G" linear directions along a second axis "H", which second axis is generally transverse to the first axis "E". Preferably, there is just enough clearance between the wedge block means 60 and each of the two parallel inner guide surfaces 38 and 39, so that the wedge block means 60 slides readily therebetween, but is not loose. Clearances in the order of 0.001" to 0.0004" (25,4 to 101,6 µm) are desirably attainable in this regard. The wedge block means 60 is movable between a blocking position, as is best seen in Figure 7, and a withdrawn position, as best seen in Figure 8. In the blocking position, the wedge block means 60 is wedgingly engaged between the substantially planar wedge-contacting surface 41 and the substantially planar surface 34 of the abutment portion 32, so as to thereby urge the pawl block 40 to its locking configuration.

In the withdrawn position, the wedge block means 60 is sufficiently removed from aforesaid wedging engagement between the pawl block 40 and the abutment surface 32, so as to permit movement of the pawl block 40 from its locking configuration to its unlocked configuration, thereby to permit relative movement of the stationary vehicle seat track member 22 and the moveable vehicle seat track member 24.

The pawl-contacting surface 62 is inclined with respect to the second axis "H" at an acute angle "α", (see Figure 7) which angle "α" is greater than 0°, and less than about 45°, depending on the co-efficient of friction of the materials of the wedge-contacting surface 41 and the pawl contacting surface 62. It has been found that an angle of about 20° is preferable for this application, where powdered metal components are used as indicated above. In the preferred embodiment shown, the pawl-contacting surface 62 is preferably also inclined with respect to the first axis "E" at an acute angle "φ", but may be oriented transversely to the first axis "E".

The wedge-contacting surface 41 is inclined with respect to the second axis "H" at an obtuse angle of incline "β" that is complementary to the angle of incline of the pawl-contacting surface 62, such that the wedge-contacting surface 41 is also inclined with respect to the second axis "H" at an angle parallel to the pawl-contacting surface 62. The pawl-contacting surface 62 of the wedge block means 60 and the wedge-contacting surface 41 of the pawl block 40 are thereby caused to operatively engage each other in flat surface-to-surface stable contact, thus precluding unwanted relative movement, and therefore, any significant "chuck", between the pawl block 40 and the wedge block means 60.

Preferably, the substantially planar surface 34 of the abutment portion 32 is substantially perpendicular with respect to the first axis "E". In this manner, any forces that are transmitted through the pawl block 40, and therefore along the direction of first axis "E", and through the wedge block means 60 to the abutment portion 40, would produce a reaction force at the substantially planar surface 34, which reaction force is oppositely directed parallel to the first axis "E". Thus, there is no component of the reaction force that acts in the fourth linear direction "G", as with prior art devises utilizing a rotary cam. A reaction force having a component that acts in the fourth linear direction "G" would cause the wedge block means 60 to be biased in the fourth linear direction "G" towards its withdrawn position. Such biasing of the wedge block means 60 in the fourth linear direction is highly undesirable, as it would tend to remove the wedge block means 60 from contact with the pawl block means 40. Accordingly, the pawl block 40 would tend to be moved away from its locking configuration.

The wedge-contacting surface 41 and the substantially planar surface 34 of the abutment portion 32 are generally opposed one to the other, and are angled with respect to each other so as to form a wedge shape, to thereby accommodate the wedge block means 60 in flat surface-to-surface stable contact between the pawl-contacting surface 62 and the wedge-contacting surface 41, and also between the abutment portion engagement surface 64 and the substantially planar surface 34 of the abutment portion 32. The substantially planar surface 34 of the abutment portion 32 and the wedge-contacting surface 41 converge with respect to each other in the third linear direction "F", so as to accommodate the shape of the wedge block means 60.

An actuation means, as indicated by the general reference numeral 70, is operatively connected to the wedge block means 60 to provide for selective movement of the wedge block means 60 in its third "F" and fourth "G" linear directions. The actuation means 70 comprises a sheathed cable 72, having a cable member 73 operatively attached at its one end 74 to the wedge block means 60, as can be best seen in Figures 7 and 8, and operatively attached at its opposite other end 76 to a handle means 78, as can best be seen in Figure 3. The sheath 71 is threadibly engaged at one end 75 to the casing 30, and is threadibly engaged at its opposite other end 77 to a retaining bracket 80 attached to one of the bracing members 19 of the vehicle seat assembly 21, so as to permit adjustability of the tightness of the cable 73. Pulling on the cable member 73, moves the wedge block moans 60 from its blocking position towards its withdrawn position against the biasing force of the first biasing means being coil spring 79, which coil spring is positioned as shown within the casing.

In use, a user manipulates the handle means 78 by lifting the handle means 78 in the direction indicated by arrow "I" (see Figure 3), which lifting of the handle means 78 correspondingly pulls the cable means 73 of the sheathed cable 72, such that the wedge block means 60 is moved in the fourth linear direction "G" towards its withdrawn position, against the biasing force of the first biasing means coil spring 79. The wedge block means 60 is, accordingly, removed from wedging engagement between the pawl block 40 and the abutment portion 32 of the case 30, so as to permit movement of the pawl block 40 from its locking configuration to its unlocked configuration. In the unlocked configuration of the pawl block 40, the linear distance between the apex of intersection 46 of the two ramp surfaces 44 and 45 and the engagement surface 45 is increased, to thereby remove the striated roller member 50 from simultaneous circumferential engagement with the generally planar engagement surface 28 and at least one of the inclined ramp surfaces 44 and 45. In the preferred embodiment illustrated, the torsion springs 54 bias the striated roller member 50 towards the apex of intersection 46 of the two ramp surfaces 44 and 45 (so as to prevent creep of the striated roller member 50), and the striated roller member 50 is accordingly, removed from circumferential engagement with the generally planar engagement surface 28. Resultingly, the generally planar engagement surface 28 may be moved with respect to the locking mechanism 20, thereby to permit relative movement of the stationary vehicle seat track member 22 and the moveable vehicle seat track member 24. Such relative movement of the stationary vehicle seat track member 22 and the moveable vehicle seat track member 24 corresponds to relative sliding movement of the vehicle seat assembly 21 between its various fore-aft positions.

When the vehicle seat assembly 21 has reached a desired fore-aft position, the user releases the handle means 78, which handle means 78 travels in the direction of arrow "J" to a rest position, as caused by the first biasing means coil spring 79, and as assisted by gravity. Accordingly, the wedge block means 60 is caused to move in the third linear direction "F" from its withdrawn position to its blocking position. During this movement of the wedge block means 60 from its withdrawn position to its blocking position, the pawl-contacting surface 62 slides along the wedge-contacting surface 41 of the pawl block 40, thus causing the pawl block 40 to move towards its locking configuration. The pawl-contacting surface 62 of the wedge block means 60 find the wedge-contacting surface 41 of the pawl block 40 remain in flat surface-to-surface stable contact one with the other during the movement of the pawl block means 60 from its withdrawn to its blocking position. In its blocking position the pawl block 40 causes the striated roller member 50 to be in simultaneous circumferential engagement with the generally planar engagement surface 28 and at least one of the inclined ramp surfaces 44 and 45 to thereby preclude relative movement of the stationary vehicle seat track member 22 and the moveable vehicle seat track member 24.

In the event of acceleration or deceleration of the vehicle having the vehicle seat assembly 21 therein, the corresponding rearwardly or forwardly directed force of inertia or momentum, as the case may be, of the vehicle seat assembly 21 is transferred through the moveable element 24 to the striated roller member 50, which striated roller member 50 is pinched between the generally planar engagement surface 28 and the respective of the two ramp surfaces 44 and 45, depending on the direction of the force. The force from the striated roller member 50 is transmitted to the respective one of the two ramp surfaces 44 and 45. Due to the sloped orientation of the ramped surfaces 44 and 45, a portion of the force is transmitted through the pawl block 40 to the respective of the inner guide surfaces 36 and 37, and to the stationary vehicle seat track member 22, and the remaining portion of the force is transmitted through the pawl block 40 to the wedge block means 60 and ultimately to the casing 30 at the abutment portion 32 thereof. The flat surface-to-surface stable contact between the wedge-contacting surface 41 of the pawl block 40 and the pawl-contacting surface 62 of the wedge block means 60 ensures that there is no significant relative movement, and therefore no looseness or "chuck", between the wedge block means 60 and the pawl block 40, unlike prior art devices utilizing cams.

It will be understood that numerous variations as will occur to those skilled in the art may be made to the above-described apparatus without departing from the claimed scope of the invention. For example, in an alternative embodiment of the present invention (not shown), it is envisioned that the wedge-contacting surface 41 could be oriented generally perpendicularly to the first axis "E" and that the substantially planar surface 34 of the abutment portion 32 could be inclined with respect to the first axis "E". The wedge-contacting surface 41 and the substantially planar surface 34 of the abutment portion 32 would remain generally opposed one to the other, and would be angled with respect to each other so as to form a wedge shape, to thereby accommodate the wedge block means 60 in flat surface-to-surface stable contact between the pawl-contacting surface 62 and the wedge-contacting surface 41 and also between the abutment portion engagement surface 64 and the substantially planar surface 34 of the abutment portion 32.

In a further alternative embodiment of the present invention (not shown), it is envisioned that the stationary element and the moveable element could be pivotally attached one to the other,such as in a vehicle seat hinge,with the generally planar engagement surface essentially forming a curved plane coincident with a radius centered on the point of pivotal attachment of the stationary and pivotal elements. In yet a further variant of this alternative embodiment (not shown) the movable element could be a control rod passing through the casing, which control rod translates the pivotal movement of the seatback portion 66 of the seat assembly 21 via a bell crank lever on the seat back portion 66 to a corresponding linear movement, which linear movement is adjustably controlled by the locking mechanism according to the invention positioned on the seat cushion portion 68 of the seat assembly 21, which seat cushion portion 68 constitutes the stationary element.

Various other embodiments of the present invention may also fall within the scope of the present invention, which is limited only by the claims presented herewith.

## Claims

1. A mechanism for selectively locking, in infinitely adjustable relation to each other, a stationary element (22) and a movable element (24) co-operatively mounted on said stationary element for movement in opposed first and second directions (A,B), said movable element having a generally planar engagement surface (28), said locking mechanism comprising:
a casing (30) rigidly mounted to said stationary element (22), said casing including a fixed abutment portion (32);
a pawl block (40) mounted within the casing and having a substantially "V"-shaped cavity defined by two ramp surfaces (44,45) inversely inclined towards an apex of intersection (46), which inclined ramp surfaces, together with said engagement surface, define a substantially triangular recess (48), said pawl block being slidably mounted with respect to said casing, so as to be slidably movable in opposite first and second linear directions (C,D) along a first axis (E) substantially perpendicular to the engagement surface (28), thereby to respectively increase and decrease the linear distance between the apex of intersection (46) and said engagement surface (28);
a striated roller member (50) operatively mounted on the casing (30) so as to be positioned with said substantially triangular recess (48) for simultaneous circumferential engagement with said generally planar engagement surface (28) and at least one of said inclined ramp surfaces (44,45) when said pawl bock (40) is moved in said first linear direction (C) along said first axis (E) to a locking configuration, and for removal from said simultaneous circumferential engagement when said pawl block is moved in said second linear direction (D) along said first axis to an unlocked configuration; and,
a wedge block means (60) having a pawl-contacting surface (62) and an abutment portion engagement surface (64), said wedge block means being movable with respect to the casing (30), respectively between:
- a blocking position, whereat said wedge block means (60) is wedgingly engaged against a substantially planar wedge-contacting surface (41) located on said pawl block and said abutment portion (32) of said casing so as to thereby urge said pawl block into said locking configuration,
- and a withdrawn position, whereat said wedge block is removed from said wedging engagement so as to permit movement of said pawl block from said locking configuration to said unlocked configuration, thereby to permit relative movement of said stationary and movable elements; and,
an actuation means (70) operatively connected to said wedge block means to provide for selective movement of said wedge block means
**characterized in that** the wedge block means (60) is slidably mounted with respect to said casing so as to be movable in opposite third and fourth linear directions (F,G) along a second axis (H) generally transverse to said first axis (E),
**and in that** in the blocking position, the wedge block means (60) is wedgingly engaged between said wedge-contacting surface (41) of the pawl block (40) and said abutment portion (32) of said casing, said wedge-contacting surface (41) of the pawl block and said pawl contacting surface (62) of the wedge block means being two mutually parallel planar surfaces which are in flat surface-to surface stable contact.

2. The locking mechanism of claim 1, wherein said pawl-conctacting surface (62) is inclined with respect to said first axis (E).

3. The locking mechanism of claim 2, wherein said pawl-contacting surface (62) is inclined with respect to said second axis (H) at an angle (α) of between 0° and 45°.

4. The locking mechanism of claim 3, wherein said wedge-contacting surface (41) is inclined with respect to said second axis (H) at an obtuse angle of incline (β) complementary to the angle of incline (α) of said pawl-contacting surface (62), such that said wedge-contacting surface is also inclined with respect to said second axis at an angle parallel to said pawl-contacting surface.

5. The locking mechanism of claim 4, wherein said pawl block (40) is slidably mounted as aforesaid between two parallel inner guide surfaces (36,37) of said casing for said movement in said opposite first and second linear directions (C,D) along said first axis (E).

6. The opposite mechanism of claim 5, wherein said actuation means (70) comprises a first biasing means (79) mounted on said casing to as to bias said wedge block means (60) in said third linear direction (F) towards said blocking position.

7. The locking mechanism of claim 6, wherein said abutment portion (32) comprises a substantially planar surface (34).

8. The locking mechanism of claim 7, wherein said abutment portion (32) is an integral part of said casing (30).

9. The locking mechanism of claim 8, wherein said wedge-contacting surface (41) and said substantially planar surface (34) of said abutment portion are generally opposed one to the other and converge with respect to each other in said third linear direction (F).

10. The locking mechanism of claim 9, wherein said substantially planar surface (34) of said abutment portion is generally perpendicular with respect to said first axis (E).

11. The locking mechanism of claim 10, wherein said striated roller member (50) is rotatably mounted on said casing by means of a centrally disposed axle means (53).

12. The locking mechanism of claim 11, wherein a second biasing means (54) is operatively mounted between the casing and the axle means, so as to substantially centre said striated roller member (50) with respect to said apex of intersection (46) of said two inversely inclined ramp surfaces.

13. The locking mechanism of claim 12, wherein said second biasing means comprises a pair or torsion springs (54), with the free ends (56) of each of said torsion springs engaging said casing (30) and the central body portion (55) of each of said torsion springs engaging a respective opposite end (53) of said axle means.

14. The locking mechanism of claim 6, wherein said actuation means (70) further comprises a sheathed cable (72) operatively attached at its one end to said wedge block means (60) and operatively attached at its opposite other end to a handle means (78), so as to move said wedge block means in said fourth linear direction (G) toward said withdrawn position against the biasing of said first biasing means (79) upon manipulation by said user.

15. The locking mechanism of claim 1, wherein said stationary element and movable element each comprise co-operating vehicle seat track members (22,24).

16. The locking mechanism of claim 15, wherein said casing (30) is mounted externally of said vehicle seat track members (22,24).

17. The locking mechanism of claim 16, wherein said generally planar engagement surface (28) is on an exterior surface of said movable element (24).

## Patentansprüche

1. Mechanismus zum wahlweisen Verriegeln in unbegrenzt einstellbarem Verhältnis zueinander eines festen Elements (22) und eines beweglichen Elements (24), die zusammenwirkend an dem festen Element angebracht sind zur Bewegung in entgegengesetzten ersten und zweiten Richtungen (A, B), wobei das bewegliche Element eine im wesentlichen ebene Eingriffsfläche (28) aufweist, wobei der Verriegelungsmechanismus aufweist:
ein Gehäuse (30), das starr an dem festen Element (22) angebracht ist, wobei das Gehäuse einen festen Anschlagabschnitt (32) aufweist;
einen Sperrklinkenblock (40), der in dem Gehäuse angebracht ist und eine im wesentlichen "V"-förmige Vertiefung aufweist, die durch zwei Rampenoberflächen (44, 45) definiert ist, die umgekehrt geneigt zu einem Schnittscheitel (46) sind, wobei die geneigten Rampenoberflächen zusammen mit der Eingriffsoberfläche eine im wesentlichen dreieckförmige Vertiefung (48) definieren, wobei der Sperrklinkenblock gleitbeweglich bezüglich des Gehäuses angebracht ist, so daß er gleitend bewegbar in einander entgegengesetzte erste und zweite lineare Richtungen (C, D) entlang einer ersten Achse (E), im wesentlichen senkrecht zu der Eingriffsoberfläche (28) angeordnet ist, um dabei den linearen Abstand zwischen dem Schnittscheitel (46) und der Eingriffsoberfläche (28) zu erhöhen bzw. zu verringern;
ein gezahntes Walzenteil (50), das wirkmäßig an dem Gehäuse (30) angebracht ist, so daß es mit der im wesentlichen dreieckförmigen Vertiefung (48) zum gleichzeitigen Umfangseingriff mit der im wesentlichen ebenen Eingriffsoberfläche (28) und wenigstens einer der geneigten Rampenoberflächen (44 und 45) angeordnet ist, wenn der Sperrklinkenblock (40) in der ersten linearen Richtung (C) entlang der ersten Achse (E) in eine Verriegelungsstellung bewegt wird, und zum Lösen von dem gleichzeitigen Umfangseingriff, wenn der Sperrklinkenblock in die zweite lineare Richtung (D) entlang der ersten Achse bewegt in eine entriegelte Stellung bewegt wird; und
eine Keilblockeinrichtung (60), die eine Sperrklinkenkontaktoberfläche (62) und eine Anschlagsabschnitteingriffsoberfläche (64) aufweist, wobei die Keilblockeinrichtung bezüglich des Gehäuses (30) entsprechend bewegt werden kann zwischen:
- einer Verriegelungsstellung, in der die Keilblockeinrichtung (60) in keilendem Eingriff gegen eine im wesentlichen ebene Keilkontaktoberfläche (41) ist, die an dem Sperrklinkenblock und dem Anschlagabschnitt (32) des Gehäuses angeordnet ist, so daß sie dadurch den Sperrklinkenblock in die Verriegelunsposition drückt,
- und einer zurückgezogenen Position, in der der Keilblock aus dem Keileingriff entfernt wird, um eine Bewegung des Sperrklinkenblocks von der Verriegelungsposition in die Entriegelungsposition zu ermöglichen, wodurch eine relative Bewegung des festen und beweglichen Elements ermöglicht wird; und
eine Betätigungseinrichtung (70), die betriebsmäßig bzw. wirkmäßig mit der Keilblockeinrichtung verbunden ist, zum wahlweisen Bewegen der Keilblockeinrichtung,
dadurch gekennzeichnet, daß
die Keilblockeinrichtung (60) gleitbeweglich bezüglich des Gehäuses angeordnet ist, so daß sie in entgegengesetzte dritte und vierte lineare Richtungen (F, G) entlang einer zweiten Achse (H), im wesentlichen senkrecht zu der ersten Achse (E) bewegbar ist,
und daß in der Verriegelungsposition die Keilblockeinrichtung (60) in Keileingriff zwischen der Keilberührungsoberfläche (41) des Sperrklinkenblocks (40) und des Anschlagabschnitts (32) des Gehäuses ist, wobei die Keilkontaktoberfläche (41) des Sperrklinkenblocks und die Sperrklinkenoberfläche (62) der Keilblockeinrichtung zwei zueinander parallele ebene Oberflächen sind, die in flachem Oberfläche zu Oberfläche stabilen Kontakt sind.

2. Verriegelungsmechanismus nach Anspruch 1, bei dem die Sperrklinkenkontaktoberfläche (62) bezüglich der ersten Achse (E) geneigt ist.

3. Verriegelungsmechanismus nach Anspruch 2, bei dem die Sperrklinkenkontaktoberfläche (62) bezüglich der zweiten Achse (H) mit einem Winkel (α) von zwischen 0° und 45° geneigt ist.

4. Verriegelungsmechanismus nach Anspruch 3, wobei die Keilberührungsoberfläche (41) bezüglich der zweiten Achse (H) mit einem stumpfen Neigungswinkel (β) geneigt ist, der komplementär zum Neigungswinkel (α) der Sperrklinkenkontaktoberfläche (62) ist, derart, daß die Keilkontaktoberfläche ebenfalls bezüglich der zweiten Achse mit einem Winkel geneigt ist, so daß sie parallel zu der Sperrklinkenkontaktoberfläche ist.

5. Verriegelungsmechanismus nach Anspruch 4, bei dem der Sperrklinkenblock (40) gleitbeweglich wie oben beschrieben zwischen zwei parallelen inneren Führungsoberflächen (36, 37) des Gehäuses ist, für die Bewegung in die entgegengesetzten ersten und zweiten linearen Richtungen (C, D) entlang der ersten Achse (E).

6. Verriegelungsmechanismus nach Anspruch 5, bei dem die Betätigungseinrichtung (70) eine erste Federeinrichtung (79) aufweist, die an dem Gehäuse angebracht ist, um die Keilblockeinrichtung (60) in die dritte lineare Richtung (F) in die Verriegelungsstellung zu drücken.

7. Verriegelungsmechanismus nach Anspruch 6, bei dem der Anschlagabschnitt (32) eine im wesentlichen ebene Oberfläche (34) aufweist.

8. Verriegelungsmechanismus nach Anspruch 7, bei dem der Anschlagabschnitt (32) ein integraler Teil des Gehäuses ist (30).

9. Verriegelungsmechanismus nach Anspruch 8, bei dem die Keilkontaktoberfläche (41) und die im wesentlichen ebene Oberfläche (34) des Anschlagabschnitts allgemein zueinander entgegengesetzt sind, und zueinander in der dritten linearen Richtung (F) konvergieren.

10. Verriegelungsmechanismus nach Anspruch 9, bei dem die im wesentlichen ebene Oberfläche (34) des Anschlagabschnitts allgemein senkrecht bezüglich der ersten Achse (E) verläuft.

11. Verriegelungsmechanismus nach Anspruch 10, bei dem das gezahnte Walzenteil (50) drehbar an dem Gehäuse mittels einer zentral angeordneten Achseneinrichtung (53) angeordnet ist.

12. Verriegelungsmechanismus nach Anspruch 11, bei dem eine zweite Federeinrichtung (54) wirkmäßig zwischen dem Gehäuse und der Achseneinrichtung angeordnet ist, um im wesentlichen das gezahnte Walzenteil (50) bezüglich des Schnittscheitels (46) der beiden umgekehrt geneigten Rampenoberflächen zu zentrieren.

13. Verriegelungsmechanismus nach Anspruch 12, bei dem die zweite Federeinrichtung ein paar von Torsionsfedern (54) aufweist, wobei die freien Enden (56) einer jeden Torsionsfeder in Eingriff stehen mit dem Gehäuse (30) und der zentrale Körperabschnitt (55) einer jeden der Torsionsfedern in ein entsprechend entgegengesetztes Ende (53) der Achseneinrichtung eingreift.

14. Verriegelungsmechanismus nach Anspruch 6, bei dem die Betätigungseinrichtung (70) weiterhin ein ummanteltes Kabel (72) aufweist, das wirkmäßig an einem seiner Enden mit der Keilblockeinrichtung (60) verbunden ist, und an seinem entgegengesetzten anderen Ende wirkmäßig an einem Handgriff (78) angebracht ist, um die Keilblockeinrichtung in die vierte lineare Richtung (G) zu der zurückgezogenen Position gegen den Druck der ersten Federeinrichtung (79) bei Betätigen durch die Benutzungsperson zu bewegen.

15. Verriegelungsmechanismus nach Anspruch 1, bei dem das stationäre oder feste Element und das bewegliche Element jeweils zusammenwirkende Fahrzeugsitzgleitschienenteile (22, 24) aufweisen.

16. Verriegelungsmechanismus nach Anspruch 15, bei dem das Gehäuse (30) außen an den Fahrzeugsitzgleitschienenteilen (22, 24) angebracht ist.

17. Verriegelungsmechanismus nach Anspruch 16, bei dem die im wesentlichen ebene Eingriffsoberfläche (28) sich auf der Außenoberfläche des beweglichen Elements (24) befindet.

## Revendications

1. Mécanisme de verrouillage sélectif, avec faculté de réglage mutuel à l'infini, d'un élément fixe (22) et d'un élément mobile (24) monté de manière coopérante sur ledit élément fixe, en vue d'un mouvement dans des première et deuxième directions opposées (A, B), ledit élément mobile présentant une surface (28) de venue en prise, substantiellement plane, ledit mécanisme de verrouillage comprenant :
un boîtier (30) monté rigidement sur ledit élément fixe (22), ledit boîtier comportant une partie fixe (32) de venue en butée ;
un bloc d'encliquetage (40) monté à l'intérieur du boîtier et muni d'une concavité pour l'essentiel configurée en "V", définie par deux rampes superficielles (44, 45) inclinées en sens inverse vers un sommet d'intersection (46), lesquelles rampes superficielles inclinées définissent un évidement (48) sensiblement triangulaire en association avec ladite surface de venue en prise, ledit bloc d'encliquetage étant monté coulissant par rapport audit boîtier pour pouvoir accomplir un coulissement, dans des première et deuxième directions rectilignes opposées (C, D), le long d'un premier axe (E) pour l'essentiel perpendiculaire à la surface (28) de venue en prise, de manière à augmenter et à diminuer respectivement la distance linéaire entre le sommet d'intersection (46) et ladite surface (28) de venue en prise ;
une pièce striée (50) du type rouleau, montée de manière opérante sur le boîtier (30) de façon à être positionnnée avec ledit évidement (48) sensiblement triangulaire, en vue d'une venue en prise circonférentielle simultanée avec ladite surface (28) de venue en prise, substantiellement plane, et avec au moins l'une desdites rampes superficielles inclinées (44, 45), lorsque ledit bloc d'encliquetage (40) est déplacé vers une configuration de verrouillage dans ladite première direction rectiligne (C), le long dudit premier axe (E), et en vue d'une suppression de ladite venue en prise circonférentielle simultanée lorsque ledit bloc d'encliquetage est déplacé vers une configuration déverrouillée, dans ladite deuxième direction rectiligne (D), le long dudit premier axe ; et
un moyen (60) à bloc de coincement, comportant une surface (62) venant au contact du cliquet et une surface (64) venant s'appliquer contre la partie de venue en butée, ledit moyen à bloc de coincement pouvant être respectivement déplacé, par rapport au boîtier (30), entre :
- une position de blocage dans laquelle ledit moyen (60) à bloc de coincement est en prise par coincement contre une surface (41) sensiblement plane, venant au contact du coin et située sur ledit bloc d'encliquetage, et contre ladite partie (32) de venue en butée dudit boîtier, de manière à solliciter ledit bloc d'encliquetage vers ladite configuration de blocage,
- et une position rétractée dans laquelle ledit moyen à bloc de coincement est libéré de ladite prise par coincement, pour permettre un mouvement dudit bloc d'encliquetage depuis ladite configuration de verrouillage jusqu'à ladite configuration déverrouillée afin d'autoriser, de la sorte, un mouvement relatif desdits éléments fixe et mobile ; et un moyen d'actionnement (70) en liaison opérante avec ledit moyen à bloc de coincement, pour provoquer un mouvement sélectif dudit moyen à bloc de coincement,
caractérisé
par le fait que le moyen (60) à bloc de coincement est monté à coulissement par rapport audit boîtier pour pouvoir être déplacé, dans des troisième et quatrième directions rectilignes opposées (F, G), le long d'un second axe (H) pour l'essentiel transversal audit premier axe (E) ;
et par le fait que, dans la position de blocage, le moyen (60) à bloc de coincement est en prise par coincement entre ladite partie (32) de venue en butée dudit boîtier et ladite surface (41) du bloc d'encliquetage (40) qui vient au contact du coin, ladite surface (41) du bloc d'encliquetage et ladite surface (62) du moyen à bloc de coincement, qui vient au contact du cliquet, étant deux surfaces planes mutuellement parallèles qui se trouvent en contact à plat stable surface contre surface.

2. Mécanisme de verrouillage selon la revendication 1, dans lequel ladite surface (62), venant au contact du cliquet, est inclinée par rapport audit premier axe (E).

3. Mécanisme de verrouillage selon la revendication 2, caractérisé par le fait que ladite surface (62), venant au contact du cliquet, est inclinée d'un angle (α) compris entre 0° et 45° par rapport audit second axe (H).

4. Mécanisme de verrouillage selon la revendication 3, dans lequel ladite surface (41) venant au contact du coin est inclinée, par rapport audit second axe (H), d'un angle obtus (β) complémentaire de l'angle d'inclinaison (α) de ladite surface (62) venant au contact du cliquet, de sorte que ladite surface venant au contact du coin est également inclinée, par rapport audit second axe, d'un angle parallèle à ladite surface venant au contact du cliquet.

5. Mécanisme de verrouillage selon la revendication 4, dans lequel ledit bloc d'encliquetage (40) est monté à coulissement, de la manière précitée, entre deux surfaces intérieures parallèles de guidage (36, 37) dudit boîtier, en vue d'accomplir ledit mouvement dans lesdites première et deuxième directions rectilignes opposées (C, D), le long dudit premier axe (E).

6. Mécanisme de verrouillage selon la revendication 5, dans lequel ledit moyen d'actionnement (70) comprend un premier moyen de sollicitation (79), monté sur ledit boîtier afin de solliciter ledit moyen (60) à bloc de coincement dans ladite troisième direction rectiligne (F), vers ladite position de blocage.

7. Mécanisme de verrouillage selon la revendication 6, dans lequel ladite partie (32) de venue en butée comprend une surface (34) sensiblement plane.

8. Mécanisme de verrouillage selon la revendication 7, dans lequel ladite partie (32) de venue en butée fait corps avec ledit boîtier (30).

9. Mécanisme de verrouillage selon la revendication 8, dans lequel ladite surface (41) venant au contact du coin, et ladite surface (34) sensiblement plane de ladite partie de venue en butée, sont pour l'essentiel opposées l'une à l'autre et convergent l'une vers l'autre dans ladite troisième direction rectiligne (F).

10. Mécanisme de verrouillage selon la revendication 9, dans lequel ladite surface (34) sensiblement plane de ladite partie de venue en butée est pour l'essentiel perpendiculaire audit premier axe (E).

11. Mécanisme de verrouillage selon la revendication 10, dans lequel ladite pièce striée (50), du type rouleau, est montée à rotation sur ledit boîtier au moyen d'un axe (53) agencé centralement.

12. Mécanisme de verrouillage selon la revendication 11, dans lequel un second moyen de sollicitation (54) est monté de manière opérante entre le boîtier et l'axe, de manière à centrer pour l'essentiel ladite pièce striée (50), du type rouleau, par rapport audit sommet d'intersection (46) des deux rampes superficielles précitées, inclinées en sens inverse.

13. Mécanisme de verrouillage selon la revendication 12, dans lequel ledit second moyen de sollicitation comprend une paire de ressorts de torsion (54), les extrémités libres (56) de chacun desdits ressorts de torsion étant en prise avec ledit boîtier (30) et la région centrale (55), formant le corps de chacun desdits ressorts de torsion, étant en prise avec une extrémité opposée respective (53) dudit axe.

14. Mécanisme de verrouillage selon la revendication 6, dans lequel ledit moyen d'actionnement (70) comprend, en outre, un câble gainé (72) en liaison opérante, par l'une de ses extrémités, avec ledit moyen (60) à bloc de coincement et en liaison opérante, par son autre extrémité opposée, avec un moyen de préhension (78), de manière à déplacer ledit moyen à bloc de coincement dans ladite quatrième direction rectiligne (G), vers ladite position rétractée, en s'opposant à la sollicitation dudit premier moyen de sollicitation (79) lors d'une manipulation par l'utilisateur.

15. Mécanisme de verrouillage selon la revendication 1, dans lequel ledit élément fixe et ledit élément mobile comprennent, chacun, des parties coopérantes (22, 24) de glissières d'un siège de véhicule.

16. Mécanisme de verrouillage selon la revendication 15, dans lequel ledit boîtier (30) est monté à l'extérieur desdites parties (22, 24) de glissières d'un siège de véhicule.

17. Mécanisme de verrouillage selon la revendication 16, dans lequel ladite surface (28) de venue en prise, substantiellement plane, se trouve sur une surface extérieure dudit élément mobile (24).
